# FASCICULE DE BREVET EUROPEEN

(11) **EP 3 002 825 B1**
(45) Date de publication et mention de la délivrance du brevet: **25.04.2018**
(21) Numéro de dépôt: 15188016.8
(22) Date de dépôt: 01.10.2015
(51) Int. Cl.: H01Q 3/26, H01Q 19/10, H01Q 21/06, H01Q 1/28, H01Q 1/50, H01Q 19/00, H01Q 19/13, H04W 84/06, H01Q 13/02, H01Q 1/24

(54) **ANTENNE À RÉFLECTEUR(S) CONFORMÉ(S) RECONFIGURABLE EN ORBITE**
ANTENNE MIT ANGEPASSTEM/N REFLEKTOR(EN), DIE IN DER UMLAUFBAHN REKONFIGURIERBAR IST
ANTENNA WITH SHAPED REFLECTOR(S) RECONFIGURABLE IN ORBIT

(30) Priorité: 03.10.2014 FR 1402239
(43) Date de publication de la demande: 06.04.2016
(73) Titulaire: THALES, 92400 Courbevoie (FR)
(72) Inventeur: NADARASSIN, Madivanane, 31037 TOULOUSE (FR); BOUDART, Julien, 31037 TOULOUSE (FR); LEVERT, Laurent, 31037 TOULOUSE (FR)
(74) Mandataire: Esselin, Sophie

(56) Documents cités:
- FR-A1- 2 755 328
- FR-A1- 2 888 674

## Description

La présente invention concerne une antenne à réflecteur(s) conformé(s) reconfigurable en orbite. Elle s'applique au domaine spatial, notamment au domaine des télécommunications par satellite et à tout type d'antenne comportant un ou plusieurs réflecteur(s) conformé(s).

Les satellites de télécommunications comportent généralement des antennes qui permettent de former un ou plusieurs faisceaux ayant une directivité optimisée pour assurer une empreinte au sol comportant des zones de service définies. Ces zones de services sont généralement définies et figées dès la conception du satellite et il n'est pas possible de les modifier en cours de mission durant la vie du satellite.

Les antennes flexibles sont des antennes capables de synthétiser un ou plusieurs faisceaux, chaque faisceau étant défini par une loi d'illumination qui est ajustable en fonction des besoins, au cours de la durée de vie du satellite. La synthèse d'un ou de plusieurs faisceaux est réalisée par contrôle de l'amplitude et/ou de la phase au niveau de chaque source rayonnante de l'antenne. La capacité de modifier la position et la forme du faisceau en orbite est particulièrement intéressante pour ajuster l'empreinte au sol en fonction de l'évolution des besoins ou pour réaliser ponctuellement un faisceau directif, ou pour obtenir des capacités d'antibrouillage.

Une première solution permettant de réaliser une empreinte au sol flexible consiste à utiliser une antenne réseau active à rayonnement direct DRA (en anglais : Direct Radiating Array). Ce type d'antenne est dépourvu de réflecteur et comporte un réseau de sources rayonnantes associées à un réseau formateur de faisceau BFN (en anglais : Beam Forming Network), des atténuateurs, des déphaseurs et des amplificateurs. Le DRA permet de synthétiser des faisceaux reconfigurables mais nécessite un grand nombre de sources rayonnantes et par conséquent un grand nombre de contrôles d'amplitude et de phase qui conduit à un matériel embarqué conséquent tant au niveau du BFN que de son dispositif électronique de commande et de régulation. Ce type d'antenne est donc particulièrement complexe, volumineux, et présente un coût et une masse élevée, ce qui réserve souvent son utilisation à des applications militaires.

Une deuxième solution consiste à utiliser une antenne FAFR (en anglais : Focal Array Fed Reflector) constituée d'un réseau de sources rayonnantes placé au point focal d'un réflecteur parabolique non conformé. La couverture réalisée par cette antenne est directement l'image de la tâche focale du réseau, la position des sources étant directement liée à la forme de la zone à couvrir. Chaque source contribue à une partie, appelée cellule, de l'empreinte au sol. Il y a donc une relation directe entre l'étendue de l'empreinte au sol, appelée aussi couverture, et le nombre de sources rayonnantes qui peut devenir très important lorsque la couverture est très étendue et poser des problèmes d'aménagement sur un satellite. Ce type d'antenne peut convenir dans des applications limitées à certaines bandes de fréquence et à des zones de couverture au sol réduites. Par ailleurs, pour effectuer une modification de ces zones de couverture au sol, cette antenne nécessite l'extinction ou l'activation d'un certain nombre de sources puis généralement, une ré-optimisation des lois d'amplitude et/ou de phase qui oblige à utiliser une matrice d'interrupteurs et à réaliser un grand nombre de contrôles. L'architecture du BFN est donc particulièrement complexe et présente un coût et une masse élevés. En outre, la résolution de l'antenne, directement liée à la taille des sources, et la capacité de reconfiguration, directement liée à la capacité du BFN, sont limitées. Il est possible de réduire la complexité de ce type d'antenne en utilisant un réflecteur à surface conformée, ce qui permet d'élargir la taille des faisceaux élémentaires élaborés par les sources et de diminuer le nombre de sources nécessaires à l'échantillonnage de la zone de couverture au sol et le nombre de contrôles correspondants. Cependant, l'antenne obtenue reste encore très complexe, coûteuse et volumineuse.

Le document FR 2888674 décrit une antenne à réflecteur conformé reconfigurable. Le document FR 2755328 décrit une antenne à formation de faisceaux ajustables pour réduire les interférences.

Ces différentes antennes connues comportent des capacités de flexibilité mais ont toutes l'inconvénient majeur d'être non optimales pour des missions de télécommunication classiques.

L'objectif de l'invention est de remédier aux inconvénients des antennes connues et de réaliser une antenne flexible plus simple, moins volumineuse et qui présente un coût moins élevé. Plus précisément, l'invention a pour but de réaliser une antenne reconfigurable en orbite à partir d'une antenne à réflecteur(s) conformé(s) existante, initialement optimisée pour assurer une zone de couverture prédéfinie et figée, cette antenne étant modifiée pour qu'elle puisse de plus générer une couverture flexible additionnelle et/ou pour obtenir une couverture flexible combinée avec la couverture initiale, pouvant être utilisée par exemple pour assurer une protection des télécommunications contre des brouilleurs sur des liaisons montantes entre des stations et un satellite.

Pour cela, l'invention consiste à modifier l'architecture de l'antenne existante en lui adjoignant un dispositif d'ajustement annexe permettant de générer un diagramme de rayonnement secondaire et de coupler le diagramme de rayonnement secondaire, par combinaison ou superposition, avec le diagramme de rayonnement principal de l'antenne pour modifier les capacités de rayonnement de l'antenne et la rendre partiellement ou complètement flexible. Le système de couplage entre le diagramme de rayonnement principal et le diagramme de rayonnement secondaire peut être de différents types, tels qu'une combinaison ou une superposition ou un filtrage.

Selon l'invention, l'antenne d'émission et de réception pour satellite de télécommunications, comporte au moins un réflecteur conformé et une source rayonnante principale, incluant une chaine de réception, apte à élaborer un faisceau principal ayant une empreinte au sol nominale. L'antenne comporte en outre un dispositif d'ajustement du faisceau principal de la source rayonnante principale, le dispositif d'ajustement comportant un réseau rayonnant secondaire constitué de plusieurs sources rayonnantes élémentaires aménagées autour de la source rayonnante principale, un réseau de formation de faisceau relié aux sources rayonnantes élémentaires apte à synthétiser un faisceau secondaire ayant un minimum d'énergie dans une direction d'un brouilleur et ayant une empreinte au sol se superposant, au moins partiellement, sur l'empreinte au sol nominale, et un dispositif de couplage comportant au moins un premier filtre connecté en réception, à la source rayonnante principale, au moins un deuxième filtre connecté en réception, en sortie du réseau de formation de faisceau, et un double multiplexeur fréquentiel comportant deux entrées respectivement connectées sur des sorties respectives du premier filtre et du deuxième filtre, le double multiplexeur fréquentiel étant apte à multiplexer les bandes de fréquence de réception de la source rayonnante principale et du réseau rayonnant secondaire pour reconstituer une bande de fréquence de réception non brouillée complète.

Le premier filtre peut être un filtre de réjection sélectif coupe-bande et le deuxième filtre peut être un filtre sélectif passe-bande, le filtre sélectif coupe-bande et le filtre sélectif passe-bande étant centrés sur des fréquences correspondant aux fréquences d'émission du brouilleur.

Selon une variante de réalisation, le premier filtre et le deuxième filtre peuvent être des filtres passe-bande couvrant la totalité d'une bande de fréquence de réception de l'antenne.

Le dispositif de couplage peut comporter en outre, un commutateur à deux positions ayant une entrée connectée en réception, à la source rayonnante principale, le commutateur comportant une première position de sortie connectée à la chaine de réception principale et une deuxième position de sortie connectée sur une entrée du réseau de formation de faisceau.

Alternativement, le dispositif de couplage peut comporter en outre, un coupleur connecté en réception, à la source rayonnante principale et comportant une première voie connectée à la chaine de réception principale et une deuxième voie connectée à une entrée du réseau de formation de faisceau.

Avantageusement, le coupleur peut être un coupleur variable incluant une capacité d'ajustement du coefficient de couplage.

Avantageusement, l'antenne peut comporter en outre un dispositif de commande à balayage électronique relié à un ordinateur de bord, le dispositif de commande à balayage électronique étant connecté au réseau de formation de faisceau.

L'intérêt majeur de ce type d'antenne est qu'il permet un fonctionnement selon deux modes différents: un mode conventionnel dans lequel l'antenne assure une couverture figée ou un mode complètement ou partiellement flexible dans lequel l'antenne élabore un faisceau flexible pour une partie de la bande de fréquence de fonctionnement de l'antenne ou pour toute la bande de fréquence de fonctionnement selon les besoins en cours de durée de vie du satellite.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma simplifié en coupe illustrant un exemple d'antenne d'émission et de réception, selon l'art antérieur ;
- figure 2a : un schéma simplifié en coupe illustrant un exemple d'antenne d'émission et de réception flexible, selon l'invention ;
- figure 2b : un schéma en coupe illustrant un exemple d'emplacement des sources du réseau rayonnant secondaire par rapport à la source principale, selon l'invention ;
- figure 3a : un schéma synoptique illustrant un dispositif d'émission et de réception dans le cas d'un exemple d'antenne mono-réflecteur, selon l'invention ;
- figure 3b : un schéma synoptique illustrant un dispositif d'émission et de réception dans le cas d'une antenne comportant deux réflecteurs, selon l'invention ;
- figure 3c : un schéma synoptique illustrant un dispositif d'émission et de réception dans le cas de l'exemple d'antenne mono-réflecteur de la figure 3a avec un BFN ajustable, selon l'invention ;
- figure 4a : un schéma synoptique détaillé de l'architecture du dispositif d'émission et de réception du réseau rayonnant secondaire des figures 3a, 3b et 3c, selon l'invention ;
- figure 4b : un schéma synoptique simplifié de l'architecture de la chaine de réception du réseau rayonnant secondaire dans le cas de la formation d'un faisceau par application de lois de phase seulement, selon l'invention ;
- figure 5a : un exemple de diagramme de rayonnement principal réalisé par la source rayonnante principale de l'antenne, selon l'invention ;
- figure 5b : un exemple de diagramme de rayonnement secondaire issu de l'une des sources rayonnantes élémentaires du réseau rayonnant secondaire de l'antenne, selon l'invention ;
- figure 6 : un exemple de scénario illustrant des emplacements de plusieurs brouilleurs et la localisation d'un ensemble de stations à servir en les protégeant contre les brouilleurs, selon l'invention ;
- figure 7a : un schéma synoptique d'un premier exemple d'architecture de l'antenne comportant un dispositif d'ajustement du faisceau principal permettant d'assurer une protection des stations, dans plusieurs canaux correspondant à une bande de fréquence prédéterminée, contre des brouilleurs situés dans la zone de couverture principale de l'antenne, selon l'invention ;
- figure 7b : un schéma synoptique d'un deuxième exemple d'architecture de l'antenne comportant un dispositif d'ajustement du faisceau principal permettant d'assurer une protection des stations contre des brouilleurs situés dans la zone de couverture principale de l'antenne, selon l'invention ;
- figure 7c : un schéma synoptique d'un troisième exemple d'architecture de l'antenne comportant un dispositif d'ajustement continu du faisceau principal permettant d'assurer une protection des stations contre des brouilleurs situés dans la zone de couverture principale de l'antenne, selon l'invention ;
- figure 7d : un schéma d'une variante de réalisation de l'architecture d'antenne de la figure 7b, selon l'invention ;
- figures 8a, 8b, 8c : trois exemples de diagrammes de rayonnement principal modifié réalisé respectivement avec les architectures des figures 7a, 7b, 7c, selon l'invention.

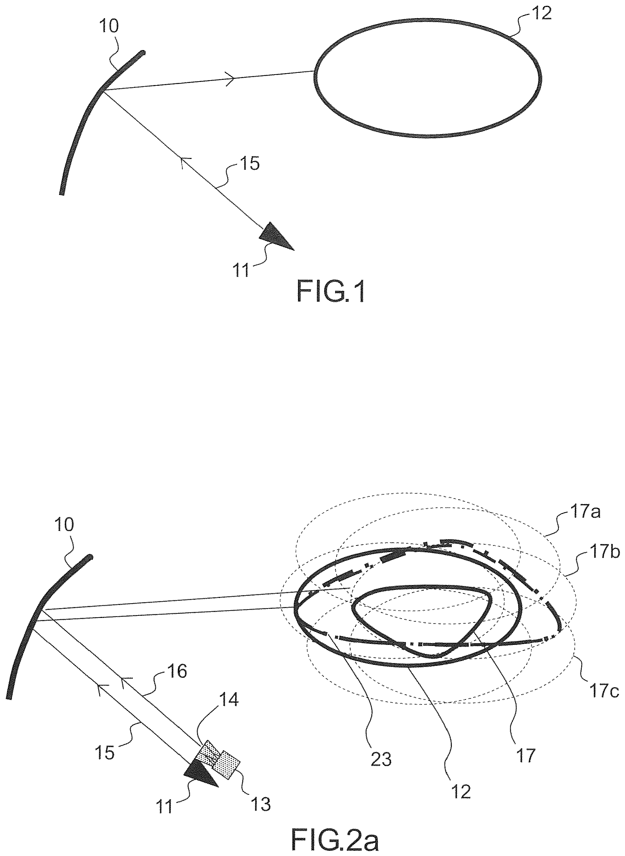

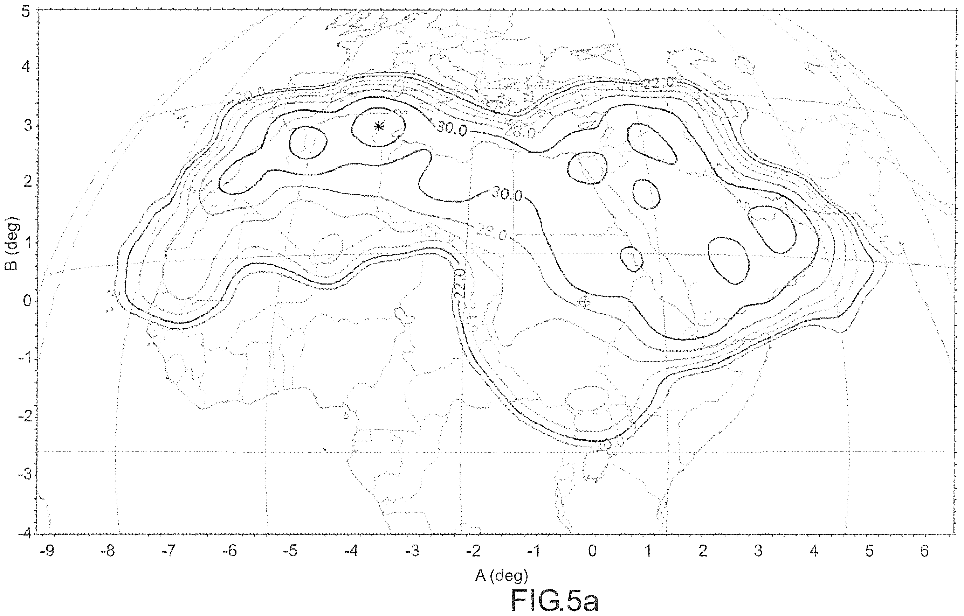

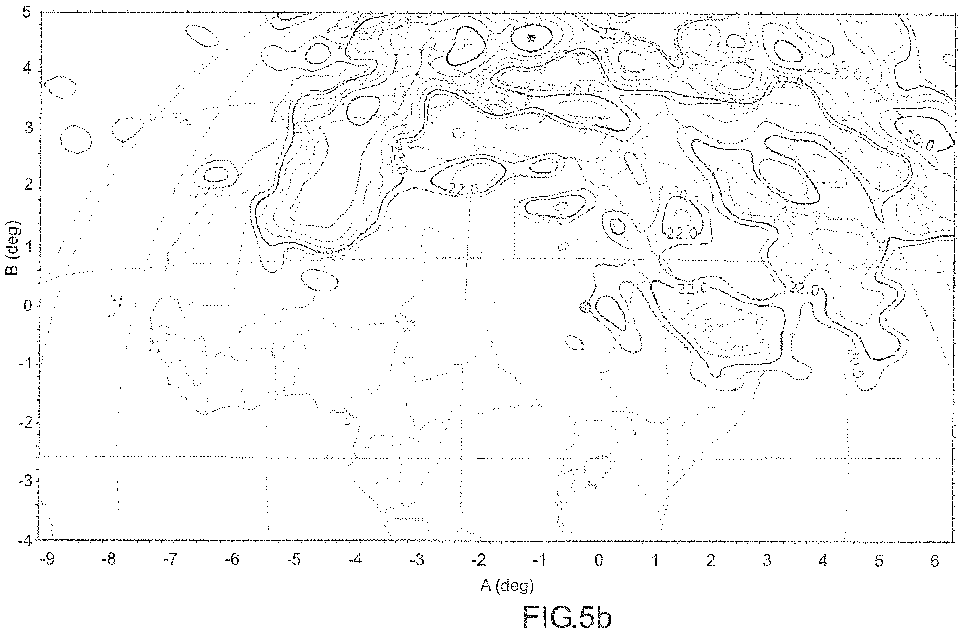

La figure 1 représente une antenne à réflecteur simple offset de l'art antérieur comportant un réflecteur 10 et une source rayonnante 11 placée au point focal du réflecteur. La source rayonnante est classiquement constituée d'un élément rayonnant, par exemple un cornet rayonnant, connecté à une chaine d'émission et de réception. A l'émission, la source rayonnante émet un faisceau d'ondes électromagnétiques 15 dans la direction du réflecteur qui réfléchit le faisceau et génère une empreinte au sol 12 choisie. A la réception, le trajet des faisceaux est inversé. Le réflecteur 10 peut comporter une surface parabolique, ou une surface conformée en trois dimensions. Une surface conformée présente des creux et des bosses localisés en des endroits choisis de la surface et permet de réfléchir un faisceau délivré par une source en étalant son énergie de façon à obtenir une empreinte au sol de forme et de dimensions choisies, comme représenté par exemple sur le diagramme de rayonnement de la figure 5a. Cependant, le faisceau réalisé par cette antenne est figé et ne peut pas être redéfini en orbite.

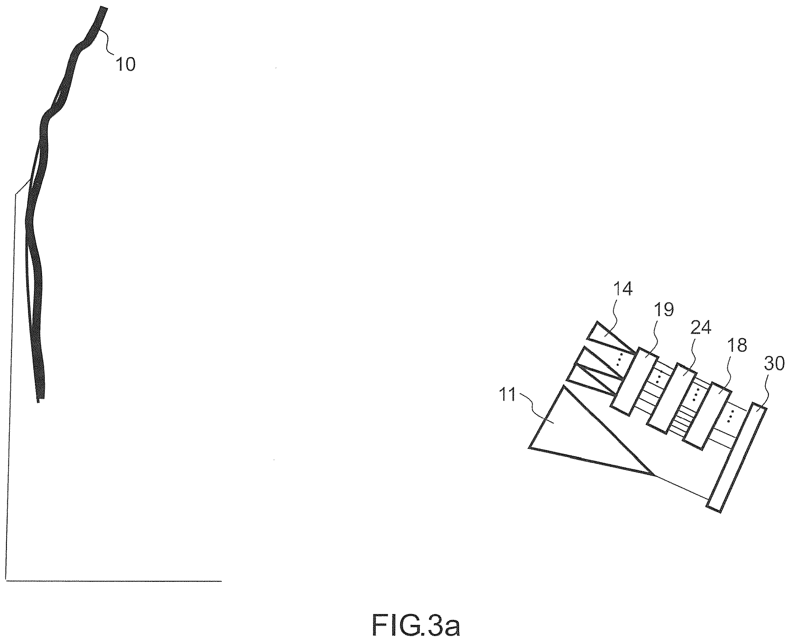

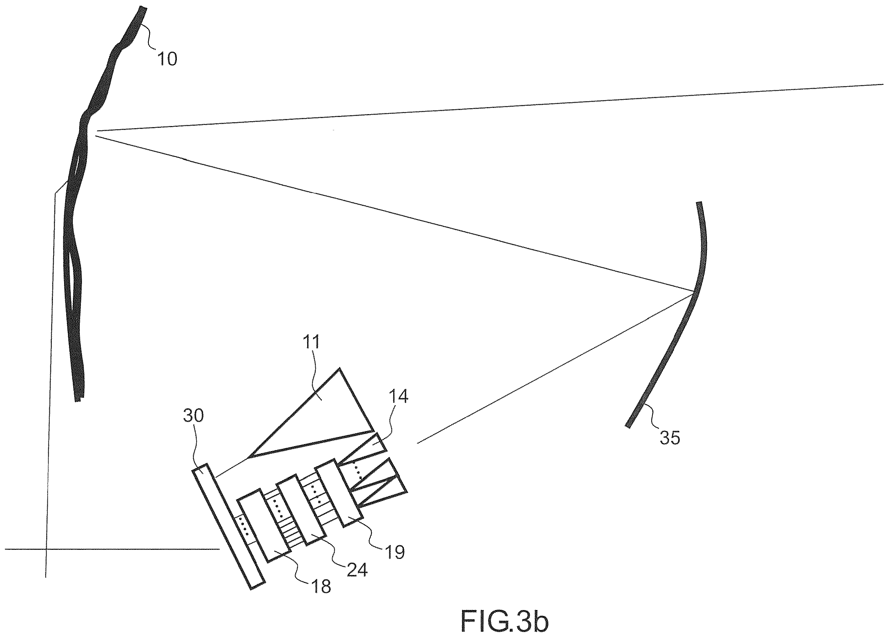

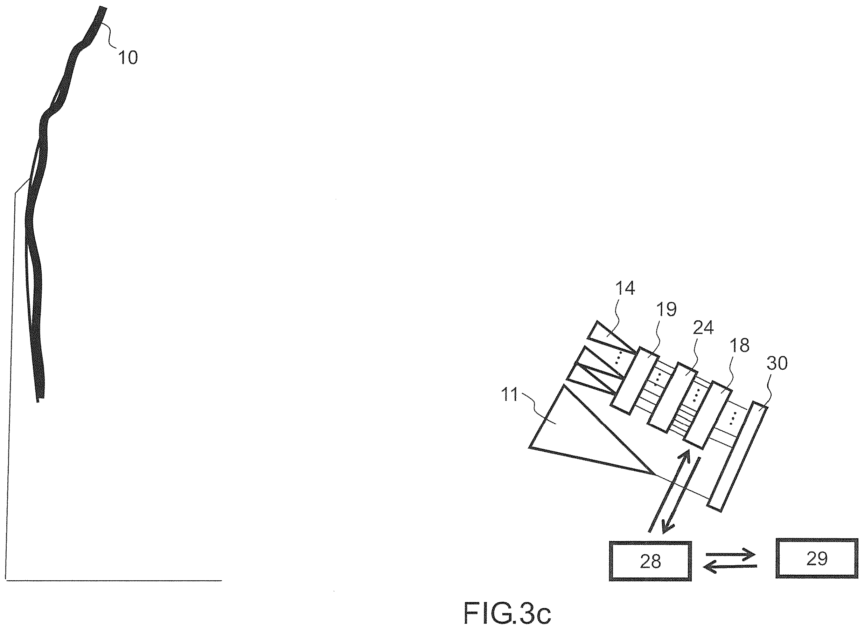

Les figures 2a, 3a et 3c représentent des schémas en coupe d'un premier exemple d'antenne flexible, reconfigurable en orbite, selon l'invention, dans le cas où l'antenne comporte un seul réflecteur conformé 10 et une source rayonnante principale 11 placée devant le réflecteur 10 et apte à rayonner un faisceau principal 15. La figure 3b représente un schéma en coupe d'un deuxième exemple d'antenne flexible, reconfigurable en orbite, selon l'invention, dans le cas où l'antenne comporte un réflecteur principal conformé 10, un sous-réflecteur 35 et une source rayonnante principale 11 placée devant le sous-réflecteur 35 et apte à élaborer un faisceau principal. Dans les exemples illustrés sur les figures 2a, 3a, 3b et 3c, pour obtenir de la flexibilité, l'invention consiste à associer la source rayonnante principale 11 à un dispositif d'ajustement apte à modifier, en réception, le faisceau principal issu de la source rayonnante principale 11 en fonction des besoins. Le faisceau principal peut être modifié soit partiellement pour certains canaux de réception, c'est-à-dire pour certaines fréquences de fonctionnement de l'antenne, ou/et pour une polarisation donnée, soit complètement pour l'ensemble de la bande de fréquence de réception. Selon l'invention, le dispositif d'ajustement comporte un réseau rayonnant secondaire 13 ayant plusieurs sources rayonnantes élémentaires 14, un réseau de formation de faisceaux BFN 18 relié aux sources rayonnantes élémentaires 14, et un dispositif de couplage 30 connecté, en réception, au réseau rayonnant secondaire 13 et à la source rayonnante principale 11.

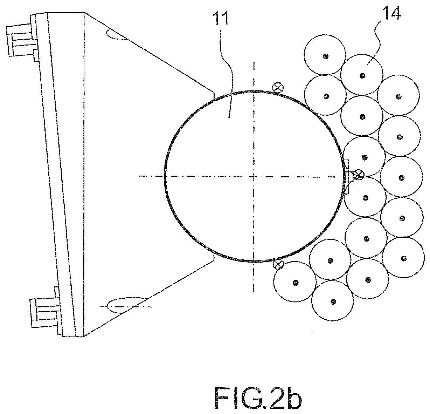

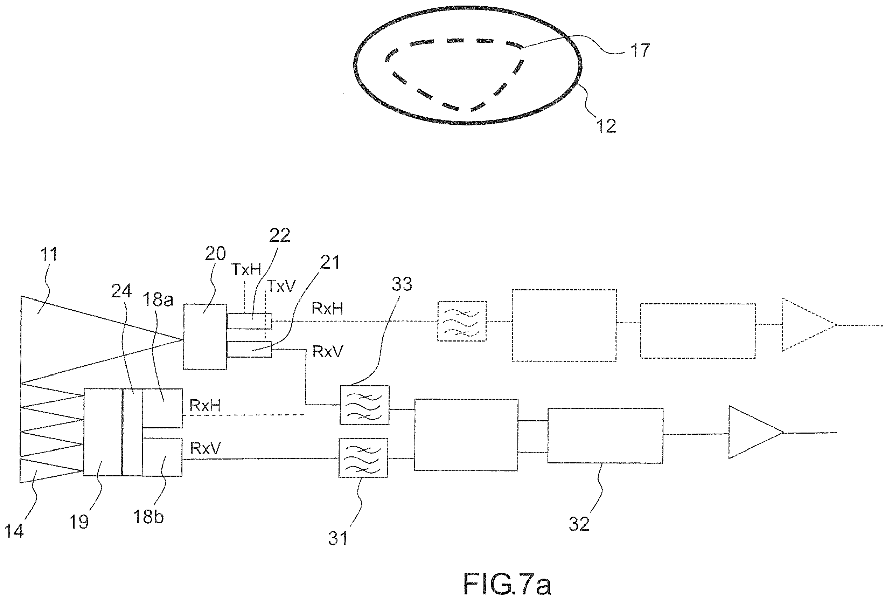

Comme représenté sur l'exemple d'aménagement illustré sur la figure 2b, les sources rayonnantes élémentaires 14 du réseau rayonnant secondaire 13 ont des dimensions plus faibles que celles de la source rayonnante principale, sont défocalisées par rapport au point focal du réflecteur 10 et aménagées autour de la source rayonnante principale 11. Les sources rayonnantes élémentaires 14 du réseau rayonnant secondaire peuvent être placées dans le plan focal du réflecteur 10 mais ce n'est pas obligatoire. La source rayonnante principale 11 est constituée d'un élément rayonnant principal, par exemple de type cornet, associé à une chaine d'émission et de réception principale connectée à l'élément rayonnant principal, et est apte à synthétiser un faisceau principal fixe 15 pour obtenir une empreinte au sol nominale 12 de forme prédéterminée et non modifiable en orbite telle que la couverture représentée sur l'exemple de la figure 1 ou sur le diagramme de rayonnement de la figure 5a. Comme le montre par exemple la figure 7a, la chaine d'émission et de réception principale comporte un excitateur 20, mono-polarisation ou bi-polarisation, par exemple un transducteur orthomode OMT, connecté à l'élément rayonnant, et un ou deux diplexeurs 21, 22 respectivement connectés à un, ou respectivement deux ports de l'OMT. L'excitateur bi-polarisation est destiné à délivrer deux polarisations orthogonales H et V sur ses deux ports, et chaque diplexeur est destiné à scinder en deux les bandes de fréquence de fonctionnement de la source rayonnante principale 11 de façon à obtenir deux ports d'émission TxH, TxV polarisés orthogonalement et deux ports de réception RxH, RxV polarisés orthogonalement. Alternativement, dans le cas où un fonctionnement dans une seule polarisation est souhaitée, il est possible d'utiliser un excitateur mono-polarisation et un seul diplexeur. Dans ce cas, la source rayonnante principale ne peut fonctionner que sur une seule polarisation en réception et en transmission

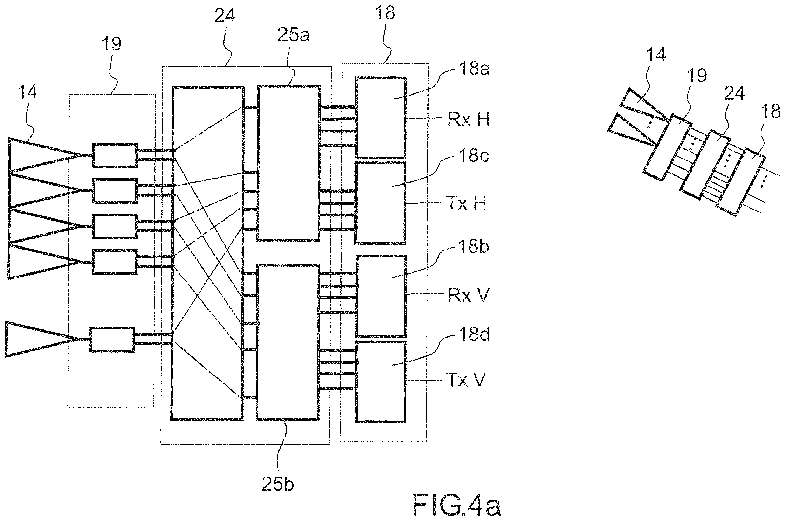

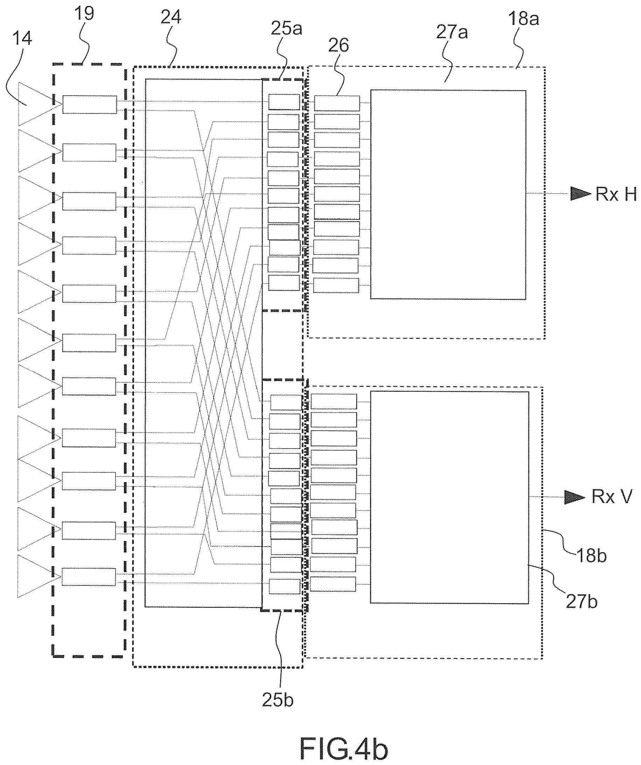

Le réseau rayonnant secondaire 13 est apte à élaborer un faisceau secondaire 16, différent du faisceau principal 15, pour couvrir une zone secondaire ayant une empreinte au sol secondaire flexible 17, 23 chevauchant au moins partiellement, l'empreinte au sol nominale 12. La forme de l'empreinte au sol secondaire 17, 23 résulte de la synthèse des faisceaux élémentaires, issus des différentes sources élémentaires 14 du réseau rayonnant secondaire 13 et réfléchis par le réflecteur 10, dont les empreintes élémentaires au sol sont illustrées sur la figure 2a par les courbes en pointillées 17a, 17b 17c. La synthèse des faisceaux élémentaires est réalisée par un ajustement des lois de phase, ou des lois d'amplitude et de phase, appliquées sur lesdites sources élémentaires par le réseau de formation de faisceau BFN 18. Comme représenté sur les figures 3a, 3b, 3c, 4a, 4b chaque source élémentaire 14 du réseau rayonnant secondaire comporte un élément rayonnant, par exemple de type cornet, relié à un excitateur 19, par exemple un OMT, fonctionnant en mono-polarisation ou en bi-polarisation. Dans le cas d'un fonctionnement en bi-polarisation, chaque excitateur comporte deux ports d'émission et de réception polarisés orthogonalement l'un par rapport à l'autre, notés H et V sur la figure 4a. Les ports d'émission et de réception des excitateurs 19 des sources rayonnantes élémentaires 14 sont connectés à un dispositif 24 de séparation des polarisations incluant des diplexeurs fréquentiels 25a, 25b, qui permet de faciliter le routage des signaux issus du réseau rayonnant secondaire 13 en séparant les canaux de réception Rx, respectivement les canaux d'émission Tx, issus de toutes les sources rayonnantes élémentaires 14 en deux groupes correspondant aux deux polarisations H et V avant de les transmettre au BFN 18. Le BFN 18 comporte quatre modules de formation de faisceaux identiques 18a, 18b, 18c, 18d, les deux modules de formation de faisceaux 18a, 18b étant respectivement dédiés à la réception et aux deux polarisations H et V et les deux autres modules de formation de faisceaux 18c, 18d étant respectivement dédiés à l'émission et aux deux polarisations H et V. Les modules du BFN 18 comportent des déphaseurs 26 qui appliquent des lois de phase spécifiques aux différents faisceaux d'émission ou de réception acheminés par les différents canaux puis transmettent respectivement les groupes de faisceaux déphasés correspondant aux deux polarisations H et V à des répartiteurs/combineurs de puissance 27a, 27b. Les répartiteurs/combineurs de puissance 27a, 27b fonctionnent soit comme des diviseurs dans le cas de la réception, soit comme des combineurs dans le cas de l'émission, et répartissent la puissance reçue entre différents ports de réception, ou respectivement combinent la puissance issue de chaque port d'émission. Le BFN 18 peut aussi comporter des amplificateurs, des atténuateurs et des déphaseurs pour permettre d'agir en amplitude et phase sur chaque voie d'émission ou de réception connectée à un élément rayonnant et obtenir une meilleure formation des faisceaux.

Lorsque le besoin de flexibilité souhaité est bien identifié et est constant dans le temps, les lois de phase et/ou d'amplitude fournies par le BFN peuvent être prédéfinies et non modifiables. C'est par exemple le cas lorsque le besoin est d'éliminer un brouilleur dont la position est bien connue. Lorsque le besoin de flexibilité peut évoluer au cours du temps, par exemple dans le cas d'interférences ponctuelles ou de brouilleurs non intentionnels et non prévus, il est possible d'utiliser un BFN ajustable dont les lois de phase et/ou d'amplitude peuvent être modifiées au cours du temps comme représenté sur la figure 3c. Dans ce cas, un faisceau flexible peut être synthétisé par modification des lois de phase et d'amplitude appliquées à chaque source rayonnante secondaire ou, comme illustré sur l'architecture simplifiée de la figure 4b sur laquelle seuls les canaux de réception sont représentés, il est également possible de synthétiser un faisceau flexible par modification de la loi de phase seulement, en utilisant un BFN simplifié dans lequel le faisceau secondaire n'est ajustable qu'en phase. Le faisceau secondaire 16 synthétisé par le réseau rayonnant secondaire 13 dépend directement des lois de phase, ou des lois d'amplitude et de phase, appliquées à chaque source rayonnante élémentaire par le BFN et est reconfigurable par modification desdites lois de phase, ou d'amplitude et de phase.

Pour faire varier les phases et/ou les amplitudes appliquées à chaque source du réseau rayonnant secondaire et ajuster, en fonction des besoins, le diagramme de rayonnement du réseau rayonnant secondaire et le faisceau secondaire qui en est issu, selon l'invention, les déphaseurs 26 peuvent être commandés par un dispositif de commande à balayage électronique 28 relié à un ordinateur de bord 29 embarqué sur le satellite. comme représenté par exemple sur la figure 3c.

L'empreinte au sol du faisceau secondaire 16 couvre alors une zone de couverture secondaire 17, 23 dont la forme et les dimensions sont ajustables et modifiables en orbite, en fonction des besoins. L'ajustement du diagramme de rayonnement du réseau rayonnant secondaire 13 et du faisceau secondaire 16 qui en résulte, est réalisé par le réseau de formation de faisceau BFN, connecté aux ports d'entrée/sortie des sources rayonnantes élémentaires 14 du réseau rayonnant secondaire 13 et est modifiable à volonté, en fonction des besoins, par modification des lois de phase et/ou amplitude du BFN commandé par le dispositif de commande à balayage électronique 28. En particulier, il est alors possible de former un diagramme de rayonnement secondaire comportant des maxima d'énergie et/ou des minima d'énergie dans des directions choisies, ce qui permet notamment de synthétiser un faisceau secondaire dont l'empreinte au sol comporte des trous de couverture dans les zones où se trouvent des brouilleurs 6 et d'éliminer ainsi les signaux brouillés dans le faisceau secondaire et/ou d'augmenter la puissance attribuée à certaines zones pour assurer une liaison ponctuelle à haut niveau de directivité permettant ainsi de discriminer les brouilleurs.

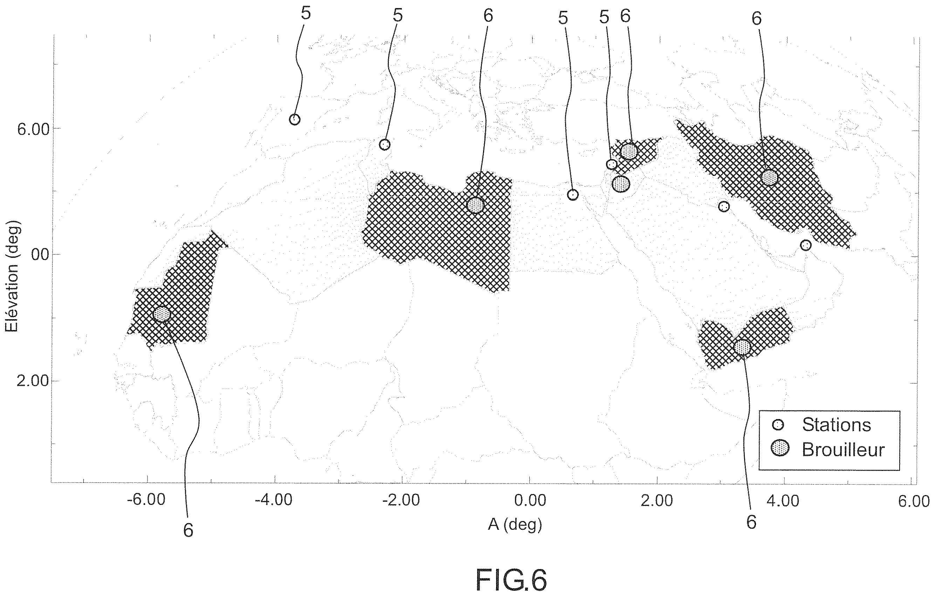

Le dispositif de couplage 30 est apte à la réception, à isoler une partie des bandes de fréquence de réception de la source principale et à synthétiser pour ces fréquences isolées, avec le réseau rayonnant secondaire, un faisceau, issu de la synthèse des faisceaux élémentaires émis par chaque source élémentaire 14, ayant une empreinte au sol 17 différente de l'empreinte au sol nominale 12. Pour des bandes de fréquence de réception brouillées, le dispositif de couplage 30 peut comporter des moyens de remplacement 31, 33, 32, de la chaine de réception principale associée à la source principale 11 par une chaine de réception secondaire associée au réseau rayonnant secondaire 13, les moyens de remplacement étant connectés en sortie du réseau de formation de faisceaux. L'architecture correspondante de l'antenne d'émission et de réception permettant, pour une ou des bandes de fréquence, d'assurer une protection d'une liaison de télécommunication montante contre des brouilleurs à l'aide du dispositif d'ajustement de l'invention est représentée sur l'exemple de réalisation illustré sur la figure 7a. Un exemple de localisation de plusieurs stations 5 (en anglais : gateway) dont les liaisons de télécommunications montantes, de chaque station vers le satellite, sont à protéger contre des brouilleurs 6 (en anglais : jammer) plus ou moins éloignés de chacune des stations est illustré sur la figure 6.

En présence d'un brouilleur 6 dans la zone de couverture d'une station 5, la transmission des signaux émis sur une liaison descendante du satellite vers les stations n'est pas brouillée et ne nécessite donc pas de traitement spécifique d'anti-brouillage. Par conséquent, à bord du satellite, les canaux d'émission TxH et TxV de l'antenne sont classiques et leur représentation ainsi que leur description ne sera pas détaillée. Au contraire, à la réception, les signaux provenant d'une liaison montante, d'une station 5 vers le satellite, sont perturbés par la présence d'un brouilleur. Sur la figure 7a, seuls les bandes de fréquences de réception correspondant à la polarisation V sont munis d'une protection d'anti-brouillage, mais il est bien entendu que l'architecture correspondante peut être également appliquée aux bandes de fréquences de réception correspondant à la polarisation H s'il est souhaité une protection d'anti-brouillage pour la polarisation H.

Pour assurer une protection des télécommunications contre des brouilleurs localisés dans la zone de couverture principale 12 de l'antenne, il est d'abord nécessaire de pouvoir identifier la fréquence d'émission et la position géographique des brouilleurs 6 et de traiter les chaines de réception principales de l'antenne pour pouvoir assurer la continuité du service dans la totalité de la bande de fréquence de fonctionnement de l'antenne. La fréquence d'émission d'un brouilleur 6 est généralement connue. La position géographique d'un brouilleur 6 peut être facilement déterminée en utilisant le réseau rayonnant secondaire 13 de l'antenne. Pour assurer la détection du brouilleur, il suffit de synthétiser une série de lois d'amplitudes et de phases permettant d'engendrer chacune un faisceau secondaire 16 dont l'empreinte au sol comporte un trou de rejection dans une direction susceptible de comporter un brouilleur, et d'appliquer ces lois sur les différentes sources rayonnantes élémentaires 14 du réseau rayonnant secondaire 13 pour réaliser un balayage des zones susceptibles de comporter un brouilleur jusqu'à ce que les canaux de réception issus du réseau rayonnant secondaire ne soient plus brouillés. La position de chaque brouilleur 6 peut ensuite être affinée par des variations plus fines des lois d'amplitudes et de phases autour de la position détectée et les indéterminations peuvent être supprimées en complétant le balayage de la zone de couverture par un diagramme de rayonnement directif comportant un maximum.

Lorsque la position géographique et les fréquences d'émission du brouilleur 6 sont connues, l'invention consiste, avec la source rayonnante principale 11, à synthétiser un faisceau principal 15 couvrant la zone de couverture principale 12 et à synthétiser, avec le réseau rayonnant secondaire 13, un faisceau secondaire 16 couvrant une zone de couverture secondaire 17 qui se superpose, au moins partiellement, sur la zone de couverture principale 12 et qui comporte un minimum d'énergie dans la direction du brouilleur 6, ce qui correspond à la formation d'un trou de réjection dans l'empreinte au sol à l'emplacement du brouilleur. L'invention consiste ensuite à la réception, dans la chaine de réception principale connectée à la source rayonnante principale 11, à supprimer les fréquences de fonctionnement brouillées et dans la chaine de réception du réseau rayonnant secondaire 13, à sélectionner uniquement les fréquences de fonctionnement correspondant aux fréquences supprimées dans la chaine de réception principale. L'invention consiste ensuite, dans le dispositif de couplage 30, à remplacer les fréquences supprimées dans la chaine de réception principale par les fréquences sélectionnées dans la chaine de réception secondaire en multiplexant les accès de réception principaux et secondaires des chaines de réception respectivement principale et secondaire pour reconstituer complètement la bande de fréquence de fonctionnement des canaux de réception principaux. La suppression des fréquences brouillées est réalisée, au sein du dispositif de couplage 30, par un filtre sélectif de réjection coupe-bande 33 connecté à la chaine de réception associée à la source rayonnante principale 11. La sélection des fréquences de fonctionnement est réalisée, au sein du dispositif de couplage 30, par un filtre sélectif passe-bande 31 connecté à la chaine de réception associée au réseau rayonnant secondaire 13, le filtre passe-bande 31 étant placé en sortie du BFN 18. Le filtre de réjection coupe-bande et le filtre passe-bande sont centrés sur des fréquences correspondant aux fréquences d'émission du brouilleur, ou des brouilleurs. Le remplacement des fréquences supprimées dans la chaine de réception principale par les fréquences sélectionnées dans la chaine de réception secondaire est ensuite réalisé, au sein du dispositif de couplage 30, par un double multiplexeur fréquentiel 32 connecté au filtre de réjection coupe-bande 33 des bandes de fréquence de réception principales et au filtre passe-bande 31 des bandes de fréquence de réception secondaires. Le double multiplexeur fréquentiel est apte à multiplexer les bandes de fréquences de réception principales et secondaires issues de la source rayonnante principale et du réseau rayonnant secondaire pour reconstituer une bande de fréquence de fonctionnement complète non brouillée avant la réémission des télécommunications, dans la bande de fréquence d'émission, vers des utilisateurs. Cela permet de reconstituer complètement la bande de fréquence de fonctionnement de la source rayonnante principale 11 de l'antenne et d'assurer une réémission non brouillée des télécommunications provenant des stations, pour toutes les fréquences de fonctionnement de l'antenne. Cette architecture permet donc de protéger des liaisons montantes fonctionnant dans certaines bandes de fréquence sans affecter les autres liaisons montantes dans les autres bandes de fréquences et sans altérer les performances de l'antenne dans ces autres bandes de fréquence. Dans le cas ou les niveaux des brouilleurs sont suffisamment faibles pour éviter la saturation de l'étage d'entrée du convertisseur de fréquence 38, les filtres sélectifs 33 et 31 peuvent être remplacés par des filtres passe-bande couvrant la totalité de la bande de fréquence de réception Rx. L'élimination des bandes de fréquence brouillées dans la chaine de réception principale et leur substitution par des bandes de fréquence correspondantes de la chaine de réception secondaire non brouillée sont alors assurées par le double multiplexeur 32 pour reconstituer une bande de fréquence de fonctionnement complète non brouillée.

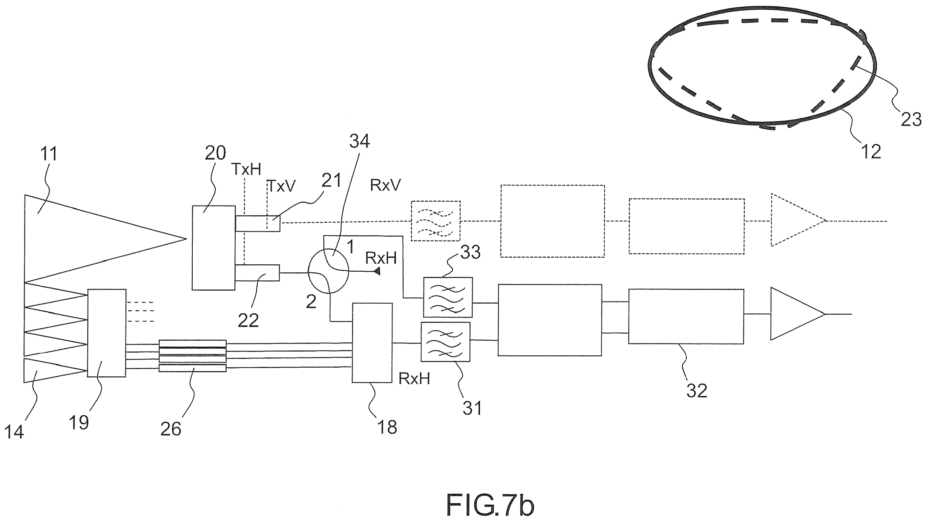

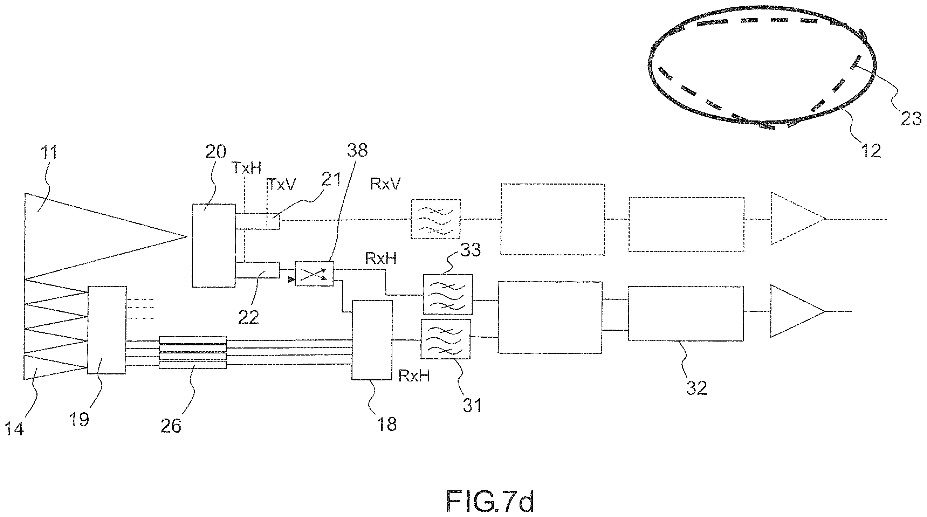

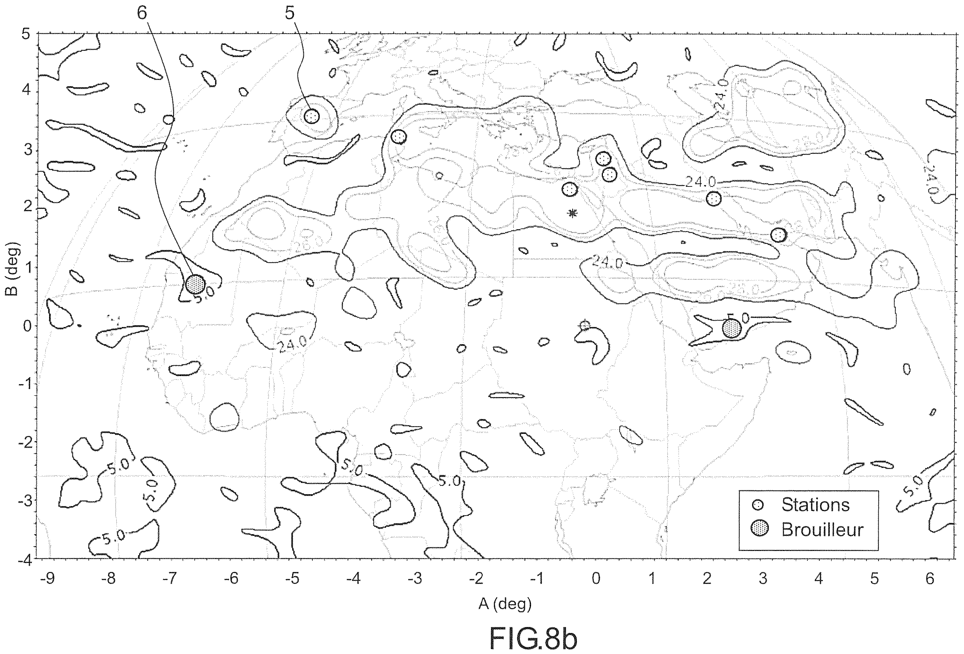

La figure 7b représente un deuxième exemple d'architecture de l'antenne d'émission et de réception selon l'invention, permettant d'assurer une protection d'une liaison de télécommunication montante contre un risque de brouillage. Dans cet exemple, le dispositif de couplage 30 est connecté sur la chaine de réception correspondant à la polarisation H, mais il peut bien entendu être également connecté sur la chaine de réception correspondant à la polarisation V. Le dispositif de couplage 30 comporte un commutateur 34 à deux positions 1, 2 ayant une entrée connectée en réception, à la source rayonnante principale 11, une première position de sortie 1 connectée à la chaine de réception principale et une deuxième position de sortie 2 connectée à la chaine de réception secondaire par une entrée du BFN 18. Alternativement, comme représenté sur la figure 7d, le commutateur 34 peut être remplacé par un coupleur 38 qui comporte une entrée reliée, en réception, à la source rayonnante principale 11, une première voie connectée à la chaine de réception principale et une deuxième voie connectée à une entrée du réseau de formation de faisceau BFN 18. Le coupleur peut être un coupleur figé selon le besoin de flexibilité et de rejection ou un coupleur variable de type VPD (en anglais : variable power divider) incluant une capacité d'ajustement du coefficient de couplage. Toute la bande de fréquence de réception du réseau rayonnant secondaire 13, correspondant à au moins une polarisation, par exemple à la polarisation H, est acheminée par la chaine de réception secondaire, en entrée du réseau de formation de faisceau BFN 18. En entrée du BFN 18, la chaine de réception associée au réseau secondaire peut éventuellement, comporter en outre une section 26 d'adaptation de phase pour compenser la différence de chemin entre la chaine de réception principale et la chaine de réception secondaire associée au réseau secondaire et constituer ainsi une seule et unique chaine de réception pour toute la bande de fréquence de fonctionnement. Il est également possible de connecter la chaine de réception principale correspondant à la polarisation V en entrée du réseau de formation de faisceau BFN 18 par l'intermédiaire du commutateur 34 à deux positions 1, 2 ou du coupleur 38. Selon la position du commutateur 34, ou selon le coefficient de couplage du coupleur 38, le diagramme de rayonnement de l'antenne est soit le faisceau principal 15, issu de la source principale 11 ayant une empreinte au sol 12, soit un faisceau combiné délivré en sortie du réseau de formation de faisceau BFN 18 ayant une empreinte au sol 23. le BFN 18 ajuste la loi de phase et/ou d'amplitude de chaque source rayonnante élémentaire 14 par rapport à la source rayonnante principale 11 pour obtenir des maxima et des minima d'énergie dans des directions choisies en fonction des besoins. En présence d'un brouilleur dont la position est connue, un minimum d'énergie peut alors être réalisé dans la direction du brouilleur. Cette architecture affecte toute la bande de fréquence de réception fonctionnant dans une même polarisation sans modifier les canaux de réception de l'autre polarisation. Elle permet une protection des télécommunications par satellite contre tout brouilleur intentionnel ou non intentionnel, et permet d'augmenter le gain des communications provenant des stations et de faire des trous de rejection dans des zones à haut risques de brouillage. L'architecture illustrée sur la figure 7b permet d'assurer des niveaux de rejection plus élevés et permet d'obtenir des maxima plus élevés avec des faisceaux ayant des empreintes au sol plus grandes que celles obtenues par l'architecture décrite en liaison avec la figure 7a, mais en contrepartie cette architecture ne permet pas, pour une même polarisation, de sélectionner quelques bandes de fréquence de réception ni une partie de la bande fréquence de réception. Le diagramme de rayonnement obtenu avec cette architecture dans le cas du scénario décrit en liaison avec la figure 6 est illustrée sur la figure 8b.

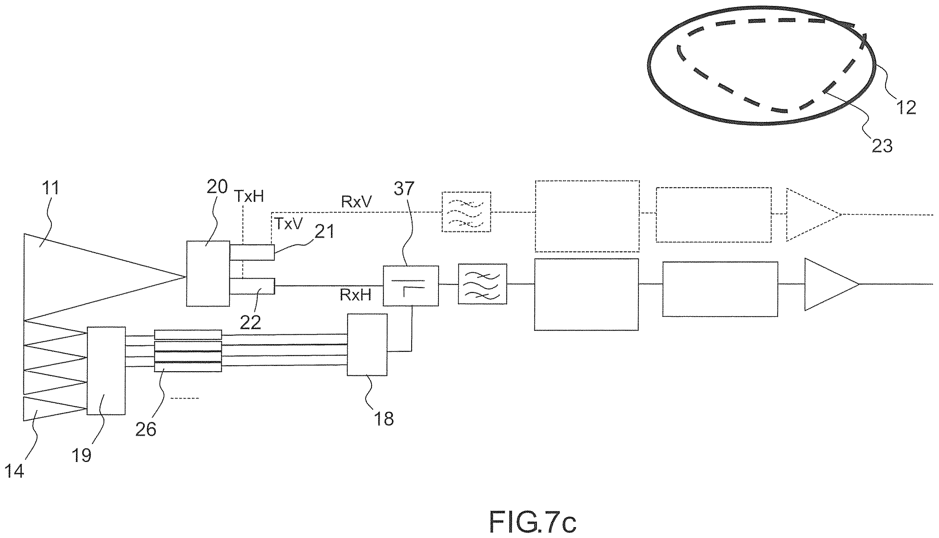

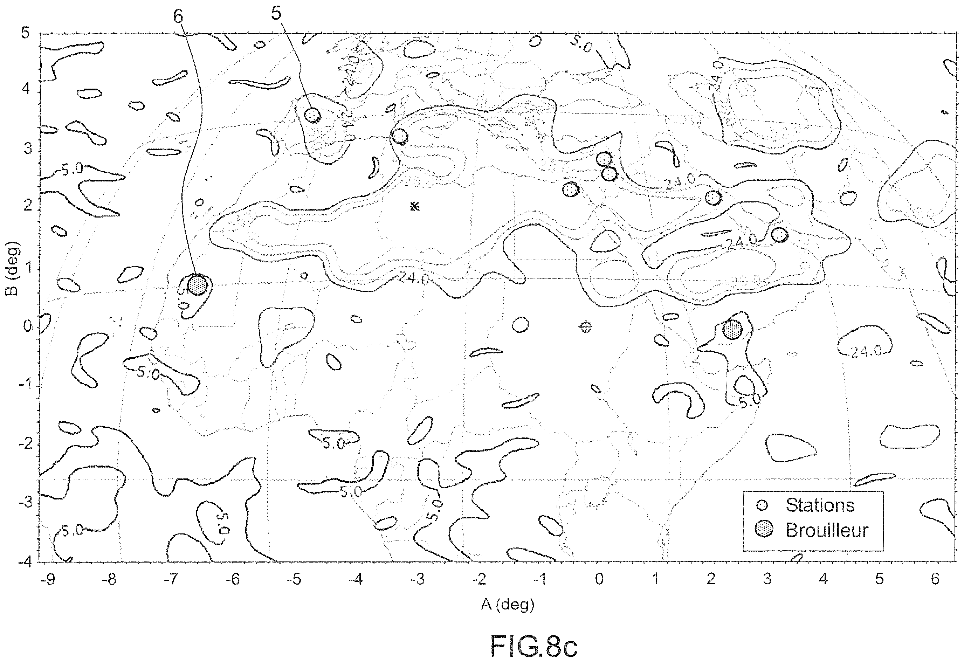

La figure 7c représente un troisième exemple d'architecture de l'antenne d'émission et de réception selon l'invention, permettant d'assurer une protection d'une liaison de télécommunication montante contre tous risques de brouillage, en continu, pour tous les canaux de réception fonctionnant dans une même polarisation H ou V, par modification du faisceau principal de l'antenne à l'aide du dispositif d'ajustement de l'invention. Dans cet exemple, tous les canaux de réception du réseau rayonnant secondaire 13 correspondant à la polarisation H sont connectés en entrée du réseau de formation de faisceau 18. En entrée du BFN 18, la chaine de réception associée au réseau secondaire peut éventuellement, comporter en outre une section 26 d'adaptation de phase pour compenser la différence de chemin entre la chaine de réception principale et la chaine de réception secondaire issue du réseau secondaire. Le réseau de formation de faisceau BFN 18 ajuste la loi de phase et/ou d'amplitude de chaque source rayonnante élémentaire 14 pour obtenir des maxima et des minima d'énergie dans des directions choisies en fonction des besoins. Le dispositif de couplage 30 connecté à la chaine de réception de la source principale 11 et en sortie du BFN comporte un coupleur 37 qui couple, en sortie du BFN 18, la chaine de réception du réseau secondaire avec la chaine de réception de la source principale 11 pour obtenir un faisceau combiné illuminant la zone de couverture 23 flexible. Cette architecture permet d'ajuster le faisceau principal de l'antenne en réception, en fonction des risques de brouillage, de façon continue, en réduisant ou en rejetant les zones brouillées, et d'éliminer ainsi tout risque de brouillage intentionnel ou non intentionnel sans interrompre les communications. L'architecture illustrée sur la figure 7c permet d'ajuster le diagramme de rayonnement de l'antenne de façon continue. Le diagramme obtenue avec cette architecture dans le cas du scénario décrit en liaison avec la figure 6 est illustrée sur la figure 8c.

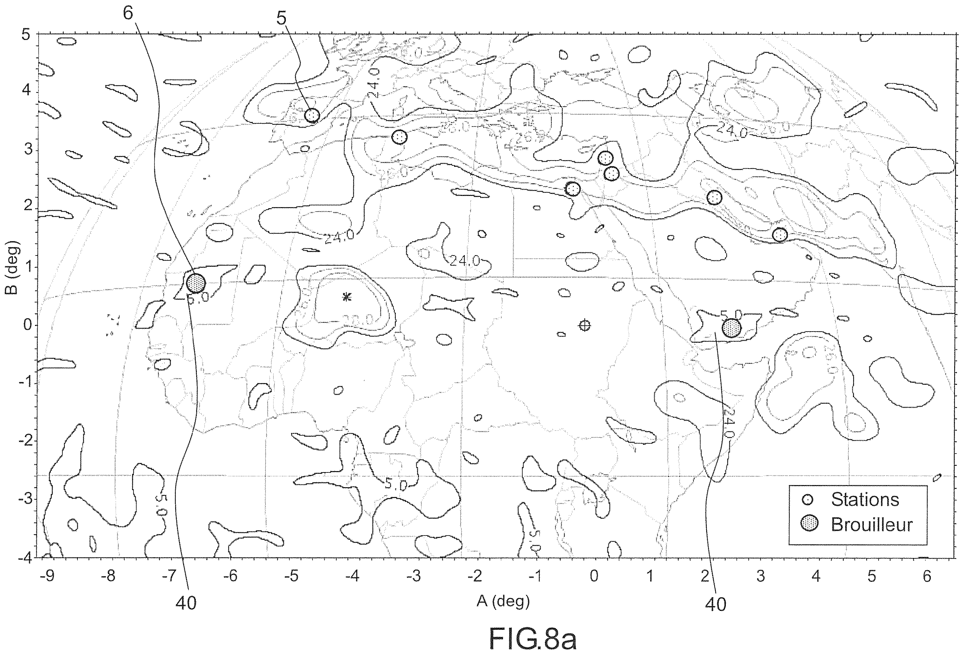

Les figures 8a, 8b, 8c illustrent trois exemples de diagrammes de rayonnement, c'est-à-dire les empreintes au sol, correspondant au faisceau principal modifié par le réseau secondaire de l'antenne et obtenus respectivement par les architectures des figures 7a, 7b et 7c pour le scénario illustré sur la figure 6. Pour la figure 8c, le coupleur utilisé est un coupleur figé selon le besoin de flexibilité et de rejection. Alternativement, le coupleur figé peut être remplacé par un coupleur variable de type VPD (en anglais : variable power divider) incluant une capacité d'ajustement du coefficient de couplage. Les figures 8a, 8b, 8c montrent que les stations 5 sont situées dans une zone de couverture de l'antenne où le rayonnement du faisceau principal modifié par le réseau rayonnant secondaire de l'antenne a une directivité maximale de l'ordre de 26 dBi alors que les brouilleurs 6 sont situés dans des trous de couverture 40 où le rayonnement du faisceau principal modifié a une directivité de l'ordre de 5 dBi donc nettement inférieure à la directivité maximale.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Antenne d'émission et de réception pour satellite de télécommunications, l'antenne comportant au moins un réflecteur conformé (10) et une source rayonnante principale (11), incluant une chaine de réception principale, apte à rayonner un faisceau principal (15) ayant une empreinte au sol nominale (12), comportant en outre un dispositif d'ajustement du rayonnement de la source rayonnante principale, le dispositif d'ajustement comportant un réseau rayonnant secondaire (13) constitué de plusieurs sources rayonnantes élémentaires (14) aménagées autour de la source rayonnante principale (11), un réseau de formation de faisceau (18, 18a, 18b, 18c, 18d) relié aux sources rayonnantes élémentaires (14) apte à synthétiser un faisceau secondaire (16) ayant un minimum d'énergie dans une direction d'un brouilleur et ayant une empreinte au sol (17) se superposant, au moins partiellement, sur l'empreinte au sol nominale (12), et un dispositif de couplage (30) **caractérisé en ce que** le dispositif de couplage (30) comporte au moins un premier filtre (33) connecté, en réception, à la source rayonnante principale (11), au moins un deuxième filtre (31) connecté en réception, en sortie du réseau de formation de faisceau (18), et un double multiplexeur fréquentiel (32) comportant deux entrées respectivement connectées sur des sorties respectives du premier filtre (33) et du deuxième filtre (31), le double multiplexeur fréquentiel étant apte à multiplexer les bandes de fréquence de réception de la source rayonnante principale et du réseau rayonnant secondaire pour reconstituer une bande de fréquence de réception non brouillée complète, le premier et le second filtre étant soit respectivement, un filtre de réjection coupe-bande centré sur la fréquence du brouilleur et un filtre sélectif passe-bande centré sur la fréquence du brouilleur, soit respectivement, des filtres passe-bande couvrant la totalité de la bande de fréquence de réception.

2. Antenne selon la revendication 1, **caractérisée en ce que** le dispositif de couplage (30) comporte en outre, un commutateur (34) à deux positions (1, 2) ayant une entrée connectée en réception, à la source rayonnante principale (11), le commutateur comportant une première position (1) de sortie connectée à la chaine de réception principale et une deuxième position (2) de sortie connectée sur une entrée du réseau de formation de faisceau (18).

3. Antenne selon l'une des revendications précédentes, **caractérisée en ce qu'**elle comporte en outre un dispositif de commande à balayage électronique (28) relié à un ordinateur de bord (29), le dispositif de commande à balayage électronique (28) étant connecté au réseau de formation de faisceau (18).

## Patentansprüche

1. Sende- und Empfangsantenne für einen Fernmeldesatelliten, wobei die Antenne mindestens einen ausgerichteten Reflektor (10) und eine Hauptstrahlquelle (11) aufweist, die einen Hauptempfangskanal einschließt, der geeignet ist, einen Hauptstrahl (15) mit einer räumlichen Nennausdehnung (12) am Boden abzustrahlen, wobei sie ferner eine Justiervorrichtung der Strahlung der Hauptstrahlquelle aufweist, wobei die Justiervorrichtung eine Sekundärstrahlgruppe (13), die aus mehreren um die Hauptstrahlquelle (11) angeordneten Elementarstrahlquellen (14) besteht, eine mit den Elementarstrahlquellen (14) verbundene Strahlbildungsgruppe (18, 18a, 18b, 18c, 18d), die geeignet ist, einen Sekundärstrahl (16) zu synthetisieren, der ein Energieminimum in einer Richtung eines Störsenders aufweist und eine räumliche Ausdehnung am Boden (17) aufweist, die sich mindestens teilweise der räumlichen Nennausdehnung am Boden (12) überlagert und eine Koppelvorrichtung (30) aufweist, **dadurch gekennzeichnet, dass** die Koppelvorrichtung (30) mindestens ein während des Empfangs mit der Hauptstrahlquelle (11) verbundenes erstes Filter (33), mindestens ein während des Empfangs am Ausgang der Strahlbildungsgruppe (18) verbundenes zweites Filter (31) und einen Doppelfrequenzmultiplexer (32) aufweist, der zwei Eingänge aufweist, die jeweils mit den jeweiligen Ausgängen des ersten Filters (33) und des zweiten Filters (31) verbunden werden, wobei der Doppelfrequenzmultiplexer geeignet ist, die Empfangsfrequenzbänder der Hauptstrahlquelle und der Sekundärstrahlgruppe zu multiplexen, um ein vollständiges, nicht gestörtes Empfangsfrequenzband nachzubilden, wobei das erste und das zweite Filter entweder jeweils ein auf die Frequenz des Störsenders zentriertes Kerbfilter und ein auf die Frequenz des Störsenders zentriertes selektives Bandpassfilter sind oder jeweils Bandpassfilter sind, die die Gesamtheit des Empfangsfrequenzbands abdecken.

2. Antenne nach Anspruch 1, **dadurch gekennzeichnet, dass** die Koppelvorrichtung (30) ferner einen Umschalter (34) mit zwei Stellungen (1, 2) mit einem Eingang aufweist, der während des Empfangs mit der Hauptstrahlquelle (11) verbunden wird, wobei der Umschalter eine erste Ausgangsstellung (1), die mit dem Hauptempfangskanal verbunden wird und eine zweite Ausgangsstellung (2) aufweist, die über einen Eingang der Strahlbildungsgruppe (18) verbunden wird.

3. Antenne nach einem der vorhergehenden Ansprüche, **dadurch gekennzeichnet, dass** sie ferner eine mit einem Bordrechner (29) verbundene Steuervorrichtung zur elektronischen Abtastung (28) aufweist, wobei die Steuervorrichtung zur elektronischen Abtastung (28) mit der Strahlbildungsgruppe (18) verbunden wird.

## Claims

1. An emitting and receiving antenna for a telecommunications satellite, said antenna comprising at least one shaped reflector (10) and a primary radiating feed (11) including a primary reception chain, said primary radiating feed being capable of radiating a primary beam (15) with a nominal ground footprint (12), said antenna further comprising a device for adjusting the radiation of the primary radiating feed, said adjustment device comprising a secondary radiating array (13) composed of a number of elementary radiating feeds (14) accommodated around the primary radiating feed (11), a beam-forming network (18, 18a, 18b, 18c, 18d) connected to the elementary radiating feeds (14) which is able to synthesize a secondary beam (16) having a minimum energy in one direction of a jammer and having a footprint (17) which is superimposed, at least partially, upon the nominal ground footprint (12), and a coupling device (30), **characterized in that** said coupling device (30) comprises at least a first filter (33) connected to the reception of the primary radiating feed (11), at least a second filter (31) connected to the reception on the output of the beam-forming network (18), and a dual frequency multiplexer (32) comprising two inputs which are connected respectively to respective outputs of the first filter (33) and the second filter (31), the dual frequency multiplexer being capable of multiplexing the reception frequency bands of the primary radiating feed and of the secondary radiating array in order to reconstitute a complete and non-jammed reception frequency band, the first and the second filter respectively being either a rejection band-stop filter centered on the jammer frequency and a selective band-pass filter centered on the frequency of the jammer, or respectively band-pass filters covering the totality of the reception frequency band.

2. The antenna according to Claim 1, **characterized in that** the coupling device (30) further comprises a switch (34) with two positions (1, 2) having an input connected to the reception of the primary radiating feed (11), said switch comprising a first output position (1) connected to the primary reception chain and a second output position (2) connected to an input of the beam-forming network (18).

3. The antenna according to either of the preceding claims, **characterized in that** it further comprises an electronic scanning control device (28) linked to an on-board computer (29), said electronic scanning control device (28) being connected to the beam-forming network (18).
